# EUROPÄISCHE PATENTSCHRIFT

(11) **EP 3 889 974 B1**
(45) Veröffentlichungstag und Bekanntmachung des Hinweises auf die Patenterteilung: **22.02.2023**
(21) Anmeldenummer: 21164730.0
(22) Anmeldetag: 24.03.2021
(51) Int. Cl.: H01B 13/00, H01R 43/28, H02G 11/02, H02G 11/00, B65H 75/36, H01R 43/052

(54) **KABELSPEICHERVORRICHTUNG FÜR EINE KABELVERARBEITUNGSMASCHINE**
CABLE STORAGE DEVICE FOR A CABLE PROCESSING MACHINE
DISPOSITIF DE STOCKAGE DE CÂBLES POUR UNE MACHINE DE TRAITEMENT DES CÂBLES

(30) Priorität: 30.03.2020 CH 3762020
(43) Veröffentlichungstag der Anmeldung: 06.10.2021
(73) Patentinhaber: komax Holding AG, 6036 Dierikon (CH)
(72) Erfinder: WICKI, Beat, 6043 Adligenswil (CH)
(74) Vertreter: Inventio AG

(56) Entgegenhaltungen:
- US-A- 4 638 558
- US-A- 6 135 336

## Beschreibung

Die vorliegende Erfindung betrifft eine Kabelspeichervorrichtung für eine Kabelverarbeitungsmaschine, eine Kabelverarbeitungsmaschine und ein Verfahren zum Betreiben einer solchen Kabelverarbeitungsmaschine.

Beim automatisierten Verarbeiten von Kabeln können geeignete Kabelspeicher zum Einsatz kommen.

In US 5125154 A, US 5178257 A und US 4638558 A werden beispielsweise Speichersysteme beschrieben, bei denen einzelne Kabel auf Speicherelemente wie etwa Einzelspulen oder Halteplatten aufgewickelt und an ihren Enden fixiert werden. Das Wickeln der einzelnen Kabel auf solche Speicherelemente kann relativ zeitaufwendig sein. Ferner kann für einen industriellen Einsatz eine entsprechend grosse Anzahl solcher Speicherelemente erforderlich sein.

Des Weiteren können einzelne Kabel miteinander zu Kabelketten verbunden und auf eine gemeinsame Spule aufgewickelt werden. Die Kabel können an ihren Enden mit einer Sollbruchstelle versehen sein oder durch zusätzliche Verbindungselemente miteinander verbunden sein. Die Abfolge der Kabel ist hier in der Regel durch die Kabelkette festgelegt und kann in der Regel nicht ohne grösseren Aufwand geändert werden.

Eine weitere Möglichkeit, Kabel zu speichern, stellen Kabelschienen dar. Dabei werden die Enden der Kabel von Halteklammern gehalten, die dicht an dicht auf einer Tragschiene montiert sind. Dadurch können Kabelschlaufen gebildet werden, die sich jedoch nur für Kabel bis zu einer bestimmten Länge eignen.

Es ist Aufgabe der Erfindung, das Speichern von mittels einer Kabelverarbeitungsmaschine verarbeiteten oder zu verarbeitenden Kabeln zu vereinfachen.

Diese Aufgabe wird durch eine Kabelspeichervorrichtung und ein Verfahren gemäss den unabhängigen Ansprüchen gelöst. Vorteilhafte Ausführungsformen sind in den abhängigen Ansprüchen sowie der nachfolgenden Beschreibung definiert.

Ein erster Aspekt der Erfindung betrifft eine Kabelspeichervorrichtung für eine Kabelverarbeitungsmaschine zum Verarbeiten von Kabeln. Die Kabelspeichervorrichtung umfasst einen wickelbaren Kabelträger mit einer Mehrzahl von Kabelhaltern zum Fixieren von Kabeln an dem Kabelträger, eine Abwickelspule zum Abwickeln des Kabelträgers und eine Aufwickelspule zum Aufwickeln des Kabelträgers, wenn der Kabelträger von der Abwickelspule abgewickelt wird, wobei mindestens eine der Spulen mit einem Spulenantrieb der Kabelverarbeitungsmaschine koppelbar ist. Ferner umfasst die Kabelspeichervorrichtung eine Umlenkeinrichtung, die ausgeführt ist, um den Kabelträger beim Abwickeln von der Abwickelspule und Aufwickeln auf die Aufwickelspule durch einen Arbeitsbereich zu führen.

Eine solche Kabelspeichervorrichtung ermöglicht ein einfaches Entnehmen und ein schnelles Speichern von Kabeln. Beispielsweise können auch mehrere Kabel gemeinsam entnommen bzw. gespeichert werden. Zudem wird eine spezifische Ausgabe einzelner Kabel ermöglicht. Vorteilhaft ist ferner, dass es möglich ist, sehr lange Kabel mit einer Länge von bis zu 10 m aufzunehmen. Somit kann eine relativ grosse Speicherkapazität erreicht werden.

Beispielsweise können durch Vor- oder Zurückspulen des Kabelträgers ähnlich einer Tonband- oder Videokassette, d. h. durch Überspringen einer oder mehrerer Ablagepositionen, an denen Kabel auf dem Kabelträger fixiert werden können, einzelne Kabel sehr schnell in beliebiger Reihenfolge entnommen bzw. gespeichert werden. Vorteilhaft ist auch, dass die Kabelspeichervorrichtung trotz der grossen Speicherkapazität sehr kompakt ausgeführt werden kann.

Der Arbeitsbereich kann ein Bereich der Kabelverarbeitungsmaschine sein, in dem Kabel verarbeitet und/oder transportiert werden können. Auch kann der Arbeitsbereich ein Bereich sein, in dem Kabel mittels einer Kabelgreifvorrichtung abgelegt oder entnommen werden können.

Der Kabelträger kann von der Abwickelspule über die Umlenkeinrichtung zur Aufwickelspule gespannt sein. Ein freies Ende des Kabelträgers kann an der Aufwickelspule befestigt sein. Eine Drehachse der Abwickelspule kann parallel zu einer Drehachse der Aufwickelspule ausgerichtet sein.

Der Kabelträger kann quer zu einer Längserstreckungsrichtung des Kabelträgers biegbar und somit wickelbar sein, sodass er auf Spulen aufgewickelt bzw. von diesen abgewickelt werden kann. Beispielsweise kann der Kabelträger in Form eines flexiblen Bands oder einer Kette mit einer Mehrzahl beweglich miteinander gekoppelter Glieder ausgeführt sein. Der Kabelträger kann beispielsweise platzsparend mit den Kabeln auf eine schmale Abwickelspule zu einer Kabelrolle aufgewickelt sein. Für ein Be- oder Entladen der Kabelspeichervorrichtung kann die Kabelrolle auf einen benötigten Arbeitsbereich ausgezogen werden. Durch Vor- oder Zurückspulen des Kabelträgers mittels des Spulenantriebs ist es möglich, zu jeder Zeit einen bestimmten Speicherplatz auf dem Kabelträger anzufahren. Dazu kann die Kabelrolle auf eine Wickeleinrichtung, etwa einen Mitnehmer des Spulenantriebs, montiert und eingespannt werden. Dementsprechend kann mindestens eine der beiden Spulen, ähnlich einer Tonband- oder Videokassette, eine zentrale Aufnahme für einen rotierenden Mitnehmer des Spulenantriebs aufweisen. Ein freies Ende des Kabelträgers kann der Aufwickelspule zugeführt werden. Durch Abwickeln des Kabelträgers von der Abwickelspule und gleichzeitiges Aufwickeln des Kabelträgers auf die Aufwickelspule kann der Kabelträger durch den Arbeitsbereich bewegt werden.

Um den Arbeitsbereich optimal nutzen zu können, kann der Kabelträger entsprechend einer Be- oder Entladebewegung einer Kabelgreifvorrichtung, die Teil der Kabelspeichervorrichtung und/oder Teil der Kabelverarbeitungsmaschine sein kann, durch den Arbeitsbereich bewegt werden. Die auf dem Kabelträger befindlichen Kabel können beispielsweise auch länger als der Arbeitsbereich sein.

Der Kabelträger kann optional über seine gesamte Länge hinweg mit maschinell verarbeiteten Positionsangaben markiert sein. Somit können genaue Ablagepositionen der Kabel festgelegt werden. Zusätzlich oder alternativ kann mindestens eine der Spulen mit einem Informationsspeicher ausgerüstet sein, um Angaben über die gespeicherten Kabel an die Kabelverarbeitungsmaschine weiterzugeben. Zusätzlich oder alternativ können solche Angaben zentral verwaltet werden. Bei einer zentralen Verwaltung kann eine eindeutige Identifikationsmarke, etwa in Form eines Barcodes oder eines RFID-Transponders, statt eines Informationsspeichers zum Einsatz kommen.

Um die Speicherkapazität des Kabelträgers wirtschaftlich zu gestalten, kann der Kabelträger mindestens zwei parallele Kabellinien aufweisen. Die Kabel werden dabei nicht nur in Kabelträgerlängsrichtung hintereinander, sondern auch nebeneinander positioniert. Mit dieser Konfiguration lässt sich beispielsweise bei einem Kabelrollendurchmesser von 600 mm und einer Breite des Kabelträgers von 40 mm eine Speicherkapazität von 60 m Kabellänge erzielen.

Die Kabelhalter dienen zum Verbinden der Kabel mit dem Kabelträger. Die Kabelhalter können auf einer Seite oder auf beiden Seiten des Kabelträgers angeordnet sein, beispielsweise auf einer Ober- bzw. Unterseite des Kabelträgers. Ein solcher Kabelhalter kann beispielsweise eine Spiralfeder, ein Druckverschluss, eine Klammer oder Ähnliches sein.

Unter einem Kabel kann ein Einzelkabel oder auch ein verdrilltes Kabel verstanden werden.

Die Umlenkeinrichtung kann mindestens zwei Umlenkrollen umfassen. Beispielsweise kann der Kabelträger von der Abwickelspule zu einer ersten Umlenkrolle, von der ersten Umlenkrolle zu einer zweiten Umlenkrolle und von der zweiten Umlenkrolle zur Aufwickelspule geführt sein. Ein zwischen der ersten Umlenkrolle und der zweiten Umlenkrolle geführter Abschnitt des Kabelträgers kann dabei durch den Arbeitsbereich geführt sein. Der Arbeitsbereich kann eine definierte Länge aufweisen, die durch die Umlenkeinrichtung eingestellt werden kann. Beispielsweise kann die Länge des Arbeitsbereichs durch Ändern eines Abstands zwischen der ersten Umlenkrolle und der zweiten Umlenkrolle variierbar sein. Die Drehachsen der Umlenkrollen können parallel zueinander ausgerichtet sein.

Der Kabelträger kann so im Arbeitsbereich geführt sein, dass eine Oberseite und/oder eine Unterseite des Kabelträgers zugänglich ist, beispielsweise für eine Kabelgreifvorrichtung oder ein Bearbeitungswerkzeug zum Bearbeiten der Kabel.

Ein zweiter Aspekt der Erfindung betrifft eine Kabelverarbeitungsmaschine. Die Kabelverarbeitungsmaschine umfasst einen Arbeitsbereich zum Verarbeiten von Kabeln, eine Kabelspeichervorrichtung, wie sie oben und im Folgenden beschrieben wird, und einen Spulenantrieb zum Antreiben mindestens einer der Spulen der Kabelspeichervorrichtung.

Im Arbeitsbereich können dem Kabelträger fertig verarbeitete Kabel zugeführt bzw. noch zu verarbeitende Kabel entnommen werden, etwa mittels einer Kabelgreifvorrichtung der Kabelverarbeitungsmaschine. Es ist möglich, dass dem Kabelträger im Arbeitsbereich gleichzeitig Kabel entnommen und zugeführt werden. Zusätzlich oder alternativ können am Kabelträger fixierte Kabel im Arbeitsbereich an einer oder mehreren Verarbeitungsstationen der Kabelverarbeitungsmaschine verarbeitet, beispielsweise abgelängt, abisoliert oder mit Anschlüssen versehen werden. Die Verarbeitung der Kabel kann sequenziell erfolgen.

Der Spulenantrieb kann beispielsweise einen Elektromotor und mindestens einen mittels des Elektromotors drehbaren Mitnehmer umfassen, der form- und/oder kraftschlüssig in eine entsprechend geformte Aufnahme in der Abwickelspule und/oder der Aufwickelspule eingreift. Der Spulenantrieb kann Teil der Kabelverarbeitungsmaschine und/oder Teil der Kabelspeichervorrichtung sein.

Die Kabelverarbeitungsmaschine kann zusätzlich ein Steuergerät zum Steuern des Spulenantriebs und/oder der Kabelgreifvorrichtung umfassen. Beispielsweise kann das Steuergerät ausgeführt sein, um die Kabelgreifvorrichtung in Abhängigkeit von einer Bewegung des Kabelträgers oder umgekehrt zu steuern.

Die Kabelverarbeitungsmaschine kann optional eine Erfassungseinrichtung zum Erfassen einer Markierung des Kabelträgers aufweisen, die Positionen in Längsrichtung des Kabelträgers codiert. Dabei kann das Steuergerät ausgeführt sein, um den Spulenantrieb abhängig von der erfassten Markierung zu steuern. Beispielsweise kann das Steuergerät den Kabelträger mittels des Spulenantriebs unter Berücksichtigung der erfassten Markierung vor- oder zurückbewegen, bis sich eine bestimmte Stelle des Kabelträgers im Arbeitsbereich befindet.

Ein dritter Aspekt der Erfindung betrifft ein Verfahren zum Betreiben einer Kabelverarbeitungsmaschine, wie sie oben und im Folgenden beschrieben wird. Das Verfahren umfasst die folgenden Schritte: Erfassen einer Markierung des Kabelträgers, Bestimmen einer Position in Längsrichtung des Kabelträgers anhand der Markierung und Bewegen des Kabelträgers mittels des Spulenantriebs, bis die Position mit einer vorgegebenen Position übereinstimmt.

Das Erfassen der Markierung kann mithilfe einer geeigneten Erfassungseinrichtung der Kabelverarbeitungsmaschine erfolgen, etwa mithilfe eines Inkrementalgebers oder Absolutwertgebers oder eines sonstigen geeigneten Sensors. Die Position in Längsrichtung des Kabelträgers kann durch ein Steuergerät der Kabelverarbeitungsmaschine bestimmt werden. Dazu kann das Steuergerät von der Erfassungseinrichtung eine Information bezüglich der erfassten Markierung empfangen. Alternativ kann die Position bereits durch die Erfassungseinrichtung bestimmt werden. In diesem Fall kann das Steuergerät die Position von der Erfassungseinrichtung empfangen.

Zusätzlich kann das Steuergerät eine Information bezüglich einer vorgegebenen Position empfangen, beispielsweise von einem Auslesegerät zum Auslesen eines Informationsträgers, der an der Abwickelspule und/oder der Aufwickelspule angebracht ist und angibt, welches Kabel an welcher Position in Längsrichtung des Kabelträgers fixiert oder zu fixieren ist. Der Informationsträger kann beispielsweise ein Speicherbaustein, ein RFID-Transponder oder ein maschinenlesbarer Code sein.

Merkmale der Kabelverarbeitungsmaschine, wie sie oben und im Folgenden beschrieben wird, können auch Merkmale des Verfahrens sein und umgekehrt.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäss einer Ausführungsform umfasst der Kabelträger eine maschinell verarbeitbare Markierung, die Positionen in Längsrichtung des Kabelträgers codiert.

Der Kabelträger kann über seine gesamte Länge oder auch nur abschnittsweise mit einer solchen Markierung versehen sein. Bei der Markierung kann es sich beispielsweise um einen zur Auswertung mit einem Inkrementalgeber oder Absolutwertgeber geeigneten Massstab oder Code handeln. Somit kann bestimmt werden, welcher Abschnitt des Kabelträgers sich gerade im Arbeitsbereich befindet.

Gemäss einer Ausführungsform sind die Kabelhalter angeordnet, um die Kabel in mindestens zwei sich in Längsrichtung des Kabelträgers erstreckenden Reihen an dem Kabelträger zu fixieren.

Anders ausgedrückt können die Kabel nicht nur hintereinander, sondern auch nebeneinander oder überlappend an dem Kabelhalter fixiert werden. Dadurch kann eine Speicherkapazität des Kabelträgers im Vergleich zu Ausführungen mit nur einer Reihe von Kabeln deutlich erhöht werden.

Gemäss einer Ausführungsform können die Kabelhalter zumindest teilweise wiederlösbar am Kabelträger befestigt sein.

Dadurch ist es möglich, Kabel an bestimmten Stellen mit Kabelhaltern zu bestücken, bevor sie am Kabelträger fixiert werden.

Gemäss einer Ausführungsform können die Kabelhalter zumindest teilweise auf dem Kabelträger verschiebbar angeordnet sein.

Dadurch kann der Kabelträger flexibel an unterschiedliche Kabellängen oder Kabeltypen angepasst werden.

Gemäss einer Ausführungsform umfasst die Kabelspeichervorrichtung ferner ein Schutzgehäuse mit einer Schutzgehäuseöffnung. Dabei sind die Abwickelspule und die Aufwickelspule zumindest teilweise innerhalb des Schutzgehäuses angeordnet. Die Umlenkeinrichtung kann ausgeführt sein, um den Kabelträger abschnittsweise entlang der Schutzgehäuseöffnung und/oder durch die Schutzgehäuseöffnung zu führen.

Zusätzlich kann die Umlenkeinrichtung zumindest teilweise innerhalb des Schutzgehäuses angeordnet sein.

Bei dem Schutzgehäuse kann es sich um ein verhältnismässig schmales Gehäuse mit einer schlitzförmigen Gehäuseöffnung handeln, etwa ähnlich einem Kassettengehäuse einer Tonband- oder Videokassette. Bei der Schutzgehäuseöffnung kann es sich um eine einzelne grosse Öffnung oder auch um eine Anordnung aus mindestens zwei kleineren separaten Öffnungen handeln, beispielsweise in Form einer Austrittsöffnung und einer Eintrittsöffnung für den Kabelträger. Die Abwickelspule und die Aufwickelspule können beispielsweise drehbar in dem Schutzgehäuse gelagert sein.

Zusätzlich zur Schutzgehäuseöffnung kann der Schutzgehäuse mindestens eine weitere Öffnung aufweisen, etwa zum Einlegen oder Entnehmen der Abwickelspule bzw. der Aufwickelspule oder zum Einführen eines Mitnehmers des Spulenantriebs in eine entsprechende (innerhalb des Schutzgehäuses angeordnete) Aufnahme der Abwickelspule bzw. der Aufwickelspule.

Es ist möglich, dass alle Komponenten der Kabelspeichervorrichtung einschliesslich des Kabelträgers vollständig innerhalb des Schutzgehäuses angeordnet sind. Denkbar ist aber auch, dass ein Abschnitt des Kabelträgers mittels der Umlenkeinrichtung aus dem Schutzgehäuse herausgeführt wird, wie es im Folgenden näher beschrieben wird. Der Arbeitsbereich kann sich in diesem Fall ausserhalb des Schutzgehäuses erstrecken.

Gemäss einer Ausführungsform umfasst die Schutzgehäuseöffnung eine Austrittsstelle und eine Eintrittsstelle. Dabei ist die Umlenkeinrichtung ausgeführt, um den Kabelträger von der Abwickelspule kommend an der Austrittsstelle aus dem Schutzgehäuse herauszuführen, durch den Arbeitsbereich zu führen und an der Eintrittsstelle zur Aufwickelspule gehend wieder in das Schutzgehäuse hineinzuführen.

Anders ausgedrückt kann der Kabelträger mittels der Umlenkeinrichtung zumindest abschnittsweise ausserhalb des Schutzgehäuses geführt werden. Dies hat den Vorteil, dass die Länge des Arbeitsbereichs unabhängig von den Abmessungen des Schutzgehäuses festgelegt werden kann.

Gemäss einer Ausführungsform ist eine Länge des Arbeitsbereichs grösser als eine Länge des Schutzgehäuses.

Dies hat den Vorteil, dass der Kabelträger auch über einen verhältnismässig langen Arbeitsbereich, etwa zum sequenziellen Verarbeiten von Kabeln, geführt werden kann, ohne dass das Schutzgehäuse in entsprechendem Mass verlängert werden muss.

Gemäss einer Ausführungsform ist der Kabelträger quer zu seiner Längsrichtung in zwei äussere Bereiche zum Aufnehmen eines jeweiligen Endabschnitts der Kabel und einen zwischen den äusseren Bereichen befindlichen mittleren Bereich zum Aufnehmen eines jeweiligen mittleren Abschnitts der Kabel unterteilt. Dabei sind die Kabelhalter in den äusseren Bereichen angeordnet.

Die Kabelhalter können ausgeführt sein, um die Kabel an deren jeweiligen Enden zu fixieren. Die Kabelhalter können beispielsweise jeweils in einem bestimmten Winkel zur Längsrichtung des Kabelträgers ausgerichtet sein, um zu gewährleisten, dass die Kabel in einer bestimmten Position auf dem Kabelhalter zum Liegen kommen. Durch diese Ausführungsform können die Kabel je nach Kabellänge und Kabeltyp in unterschiedlichsten Formen auf dem Kabelhalter fixiert werden, beispielsweise s-förmig, u-förmig oder diagonal, d. h. schräg zur Längsrichtung des Kabelträgers verlaufend.

Gemäss einer Ausführungsform sind die Kabelhalter in den äusseren Bereichen in Längsrichtung des Kabelträgers aneinandergereiht.

Dabei kann beispielsweise jeder der Kabelhalter des einen äusseren Bereichs einem Kabelhalter des anderen äusseren Bereichs gegenüberliegend angeordnet sein.

Gemäss einer Ausführungsform kann der Kabelträger im mittleren Bereich eine Mehrzahl zusätzlicher Kabelhalter zum Fixieren der mittleren Abschnitte der Kabel aufweist.

Die zusätzlichen Kabelhalter können beispielsweise zur Abgrenzung der äusseren Bereiche zum mittleren Bereich dienen. Hierzu können die zusätzlichen Kabelhalter etwa als Wände mit schlitzförmigen Aussparungen zum Aufnehmen der Kabel oder als Bürstenleisten realisiert sein. Die zusätzlichen Kabelhalter können beispielsweise auch mittig zwischen den zwei äusseren Bereichen angeordnet sein. Mithilfe der zusätzlichen Kabelhalter kann das Entnehmen bzw. Aufnehmen der Kabel weiter vereinfacht werden.

Gemäss einer Ausführungsform weist der Kabelträger eine Mehrzahl von Bearbeitungsöffnungen zum Bearbeiten der Kabel auf.

Die Bearbeitungsöffnungen können beispielsweise einen beidseitigen Zugriff auf jeweilige Enden der auf dem Kabelträger fixierten Kabel ermöglichen. Somit kann die Bearbeitung der Kabel vereinfacht werden.

Gemäss einer Ausführungsform weist der Kabelträger eine Mehrzahl von Schutzklappen zum Schützen der Kabel auf. Der Kabelträger wird in einem zugeklappten Zustand der Schutzklappen teilweise von den Schutzklappen verdeckt und in einem aufgeklappten Zustand der Schutzklappen freigegeben.

Die Schutzklappen können auf einer Oberseite und/oder einer Unterseite des Kabelträgers angeordnet sein. Ferner können die Schutzklappen so positioniert sein, dass im zugeklappten Zustand jeweils nur zwischen den Kabelhaltern befindliche Abschnitte des Kabelträgers verdeckt werden, während die Kabelhalter weiterhin zugänglich sind. Möglich ist auch, dass die Schutzklappen im zugeklappten Zustand Abschnitte des Kabelträgers verdecken, in denen die jeweiligen Enden der Kabel angeordnet sind. Beispielsweise können die Schutzklappen im zugeklappten Zustand auch die weiter oben beschriebenen Bearbeitungsöffnungen abdecken.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: eine Kabelverarbeitungsmaschine gemäss einem Ausführungsbeispiel der Erfindung;
- Fig. 2 zeigt: eine Vorrichtung zum Befüllen einer Kabelspeichervorrichtung gemäss einem Ausführungsbeispiel der Erfindung;
- Fig. 3 zeigt: eine Kabelverarbeitungsmaschine zum sequenziellen Verarbeiten von Kabeln gemäss einem Ausführungsbeispiel der Erfindung;
- Fig. 4 zeigt: eine Kabelverarbeitungsmaschine mit einer kassettenähnlichen Kabelspeichervorrichtung gemäss einem Ausführungsbeispiel der Erfindung,
- Fig. 5 zeigt: eine Kabelverarbeitungsmaschine mit verlängertem Arbeitsbereich gemäss einem Ausführungsbeispiel der Erfindung;
- Fig. 6 zeigt: eine kassettenähnliche Kabelspeichervorrichtung gemäss einem Ausführungsbeispiel der Erfindung im verschlossenen Zustand;
- Fig. 7 zeigt: die Kabelspeichervorrichtung aus Fig. 6 im geöffneten Zustand;
- Fig. 8 zeigt: Komponenten der Kabelspeichervorrichtung aus den Figuren 6 und 7;
- Fig. 9 zeigt: eine Abwickelspule gemäss einem Ausführungsbeispiel der Erfindung,
- Fig. 10 zeigt: einen Abschnitt eines Kabelträgers gemäss einem Ausführungsbeispiel der Erfindung mit zwei kurzen Kabeln;
- Fig. 11 zeigt: einen Abschnitt des Kabelträgers aus Fig. 10 mit einem langen Kabel;
- Fig. 12 zeigt: einen Abschnitt eines Kabelträgers gemäss einem weiteren Ausführungsbeispiel der Erfindung mit diagonal angeordneten Kabeln;
- Fig. 13 zeigt: einen Abschnitt eines Kabelträgers gemäss einem weiteren Ausführungsbeispiel der Erfindung mit u-förmig angeordneten Kabeln;
- Fig. 14 zeigt: einen Abschnitt eines Kabelträgers mit Bearbeitungsöffnung und Schutzklappen gemäss einem weiteren Ausführungsbeispiel der Erfindung;
- Fig. 15 zeigt: eine Draufsicht auf den Kabelträger aus Fig. 14;
- Fig. 16 zeigt: einen Kabelhalter gemäss einem Ausführungsbeispiel der Erfindung;
- Fig. 17 zeigt: einen Kabelhalter gemäss einem weiteren Ausführungsbeispiel der Erfindung;
- Fig. 18 zeigt: einen Kabelhalter gemäss einem weiteren Ausführungsbeispiel der Erfindung;
- Fig. 19 zeigt: einen Kabelhalter gemäss einem weiteren Ausführungsbeispiel der Erfindung;
- Fig. 20 zeigt: einen Endabschnitt eines Kabels zur Fixierung auf einem Kabelträger gemäss einem Ausführungsbeispiel der Erfindung;
- Fig. 21 zeigt: ein Blockdiagramm zur Veranschaulichung eines Verfahrens zum Betreiben einer Kabelverarbeitungsmaschine gemäss einem Ausführungsbeispiel der Erfindung.

Die Figuren sind lediglich schematisch und nicht massstabsgetreu. Gleiche Bezugszeichen bezeichnen in den verschiedenen Figuren gleiche oder gleichwirkende Merkmale.

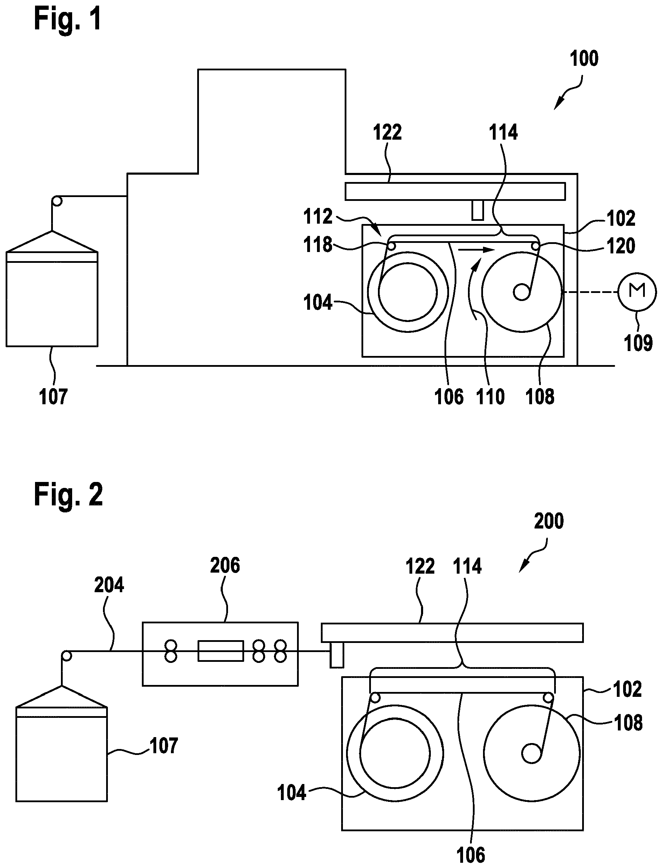

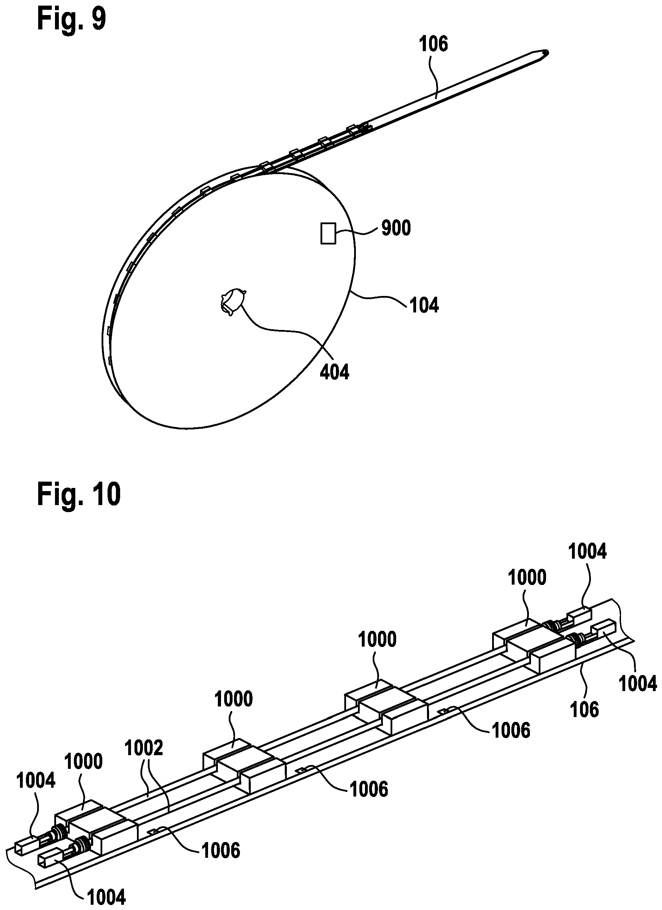

Fig. 1 zeigt eine Kabelverarbeitungsmaschine 100 mit einer Kabelspeichervorrichtung 102 zum Speichern von Kabeln. Die Kabelspeichervorrichtung 102 umfasst eine Abwickelspule 104, auf die ein erster Abschnitt eines Kabelträgers 106 aufgewickelt ist, sowie eine Aufwickelspule 108, auf die ein zweiter Abschnitt des Kabelträgers 106 aufgewickelt ist. Auf dem Kabelträger 106 ist mittels einer Mehrzahl von Kabelhaltern eine Mehrzahl von Kabeln, die von der Kabelverarbeitungsmaschine 100 bearbeitet wurden, fixiert (der Kabelträger 106 wird nachfolgend anhand der Figuren 10 bis 20 noch näher beschrieben).

Der Kabelverarbeitungsmaschine 100 kann aus einem Kabelbehälter 107 Kabelmaterial zur weiteren Verarbeitung, etwa zum Ablängen, Abisolieren, Bestücken mit Steckern o. Ä., zugeführt werden. Die fertig bearbeiteten Kabel werden dann in die Kabelspeichervorrichtung 102 eingebracht, d. h. auf den Kabelträger 106 aufgebracht.

Beispielsweise kann die Abwickelspule 104 mit einem leeren Kabelträger 106 bewickelt sein, wobei die Aufwickelspule 108 mit dem Kabelträger 106 und den darauf fixierten bearbeiteten Kabeln bewickelt wird.

Mindestens eine der beiden Spulen 104, 108 ist durch einen Spulenantrieb 109 der Kabelverarbeitungsmaschine 100 in eine Antriebsrichtung 110 drehbar. Beispielsweise kann der Spulenantrieb 109 die Aufwickelspule 108 antreiben. Dabei wird der Kabelträger 106 von der Abwickelspule 104 abgewickelt und auf die Aufwickelspule 108 aufgewickelt. Eine mechanische Kopplung zwischen dem Spulenantrieb 109 und der Aufwickelspule 108 ist mit einer gestrichelten Linie angedeutet.

Ferner umfasst die Kabelspeichervorrichtung 102 eine Umlenkeinrichtung 112, die einen zwischen dem ersten Abschnitt und dem zweiten Abschnitt befindlichen dritten Abschnitt des Kabelträgers 106 durch einen Arbeitsbereich 114 führt. Der dritte Abschnitt des Kabelträgers 106 erstreckt sich dabei in einer Ebene durch den Arbeitsbereich 114. Je nach Anwendung kann der Kabelträger 106 im Arbeitsbereich 114 aber auch in verschiedene Richtungen umgelenkt werden, sodass sich der Kabelträger 106 im Arbeitsbereich 114 in mehreren Ebenen erstreckt.

Die Umlenkeinrichtung 112 kann eine erste Umlenkrolle 118 und eine zweite Umlenkrolle 120 umfassen, wobei die erste Umlenkrolle 118 den Kabelträger 106 von der Abwickelspule 104 kommend in den Arbeitsbereich 114 führt und die zweite Umlenkrolle 120 den Kabelträger 106 vom Arbeitsbereich 114 kommend zur Aufwickelspule 108 führt. Eine Länge des Arbeitsbereichs 114 kann somit im Wesentlichen von einem Abstand zwischen den jeweiligen Drehachsen der beiden Umlenkrollen 118, 120 bestimmt werden.

Im Arbeitsbereich 114 können dem Kabelträger 106 Kabel zugeführt und/oder entnommen werden. Dies kann mithilfe einer Kabelgreifvorrichtung 122 der Kabelverarbeitungsmaschine 100 erfolgen.

Durch Umkehren der Antriebsrichtung 110 mittels des Spulenantriebs 109 kann der Kabelträger 106 auch in eine entgegengesetzte Richtung durch den Arbeitsbereich 114 bewegt werden.

Alternativ oder zusätzlich kann der Spulenantrieb 109 die Abwickelspule 104 antreiben.

Fig. 2 zeigt eine Vorrichtung 200 zum Befüllen der Kabelspeichervorrichtung 102 mit abgelängten Kabeln. Die Vorrichtung 200 umfasst einen Kabelbehälter 107 mit Kabelmaterial 204, das vom Kabelbehälter 107 in eine Ablängvorrichtung 206 geführt wird. Die Ablängvorrichtung 206 zerteilt das Kabelmaterial 204 in eine Mehrzahl einzelner Kabel mit einer definierten Länge. Mittels einer Kabelgreifvorrichtung 122 werden die einzelnen Kabel von der Ablängvorrichtung 206 zur Kabelspeichervorrichtung 102 transportiert und dort im Arbeitsbereich 114 auf dem Kabelträger 106 platziert.

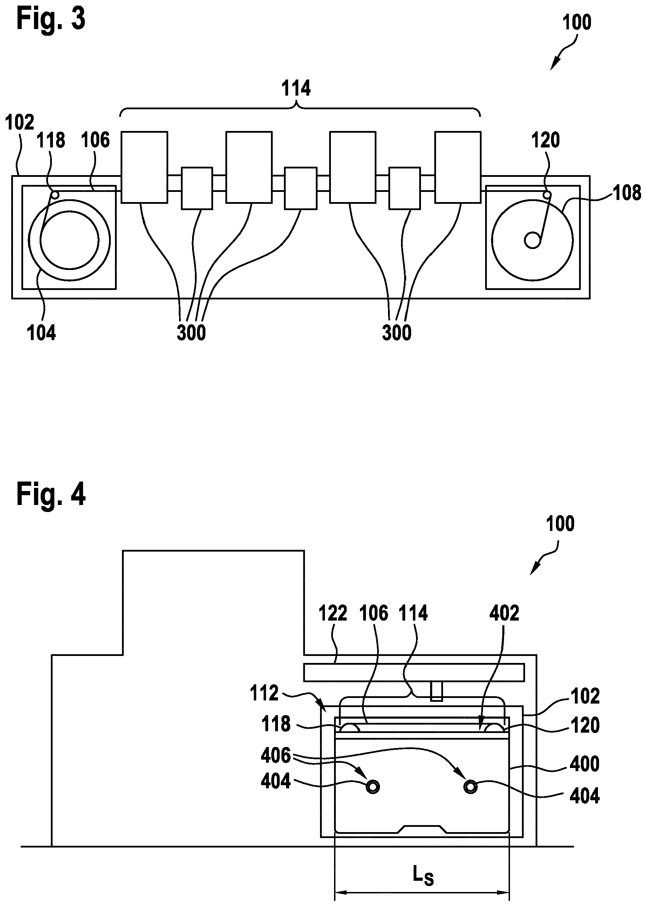

Die mit den abgelängten Kabeln bestückte Aufwickelspule 108 kann dann beispielsweise in eine sequenzielle Kabelverarbeitungsmaschine 100 zur weiteren Verarbeitung eingelegt werden und dort abgewickelt werden, wie es nachfolgend anhand von Fig. 3 beschrieben ist. Die Aufwickelspule 108 aus Fig. 2 fungiert in Fig. 3 als Abwickelspule 104.

Fig. 3 zeigt eine Kabelverarbeitungsmaschine 100 zum sequenziellen Verarbeiten von Kabeln. Im Unterschied zu der in Fig. 1 gezeigten Kabelverarbeitungsmaschine 100 umfasst die Kabelverarbeitungsmaschine 100 hier eine sequenzielle Bearbeitungsmaschine mit mehreren hintereinander angeordneten Kabelbearbeitungsstationen oder Prozessmodulen 300. Dementsprechend ist der Arbeitsbereich 114 hier deutlich länger als in Fig. 1. Der Kabelträger 106 verläuft dabei von der Abwickelspule 104 zur ersten Umlenkrolle 118, von der ersten Umlenkrolle 118 durch jede der Kabelbearbeitungsstationen 300 bis zur zweiten Umlenkrolle 120 und von dort zur Aufwickelspule 108.

Zu Beginn des Bearbeitungsprozesses wird ein freies Ende des Kabelträgers 106 in die Bearbeitungsmaschine eingezogen und auf die Aufwickelspule 108 aufgewickelt. Während der Kabelträger 106 die Bearbeitungsmaschine durchläuft, können die Kabelenden der am Kabelträger 106 fixierten Kabel in den Kabelbearbeitungsstationen 300 bearbeitet werden. Die Kabelbearbeitungsstationen 300 können Bearbeitungsschritte wie etwa Aufbringen einer Tülle, Abisolieren, Crimpen oder Prüfen ausführen.

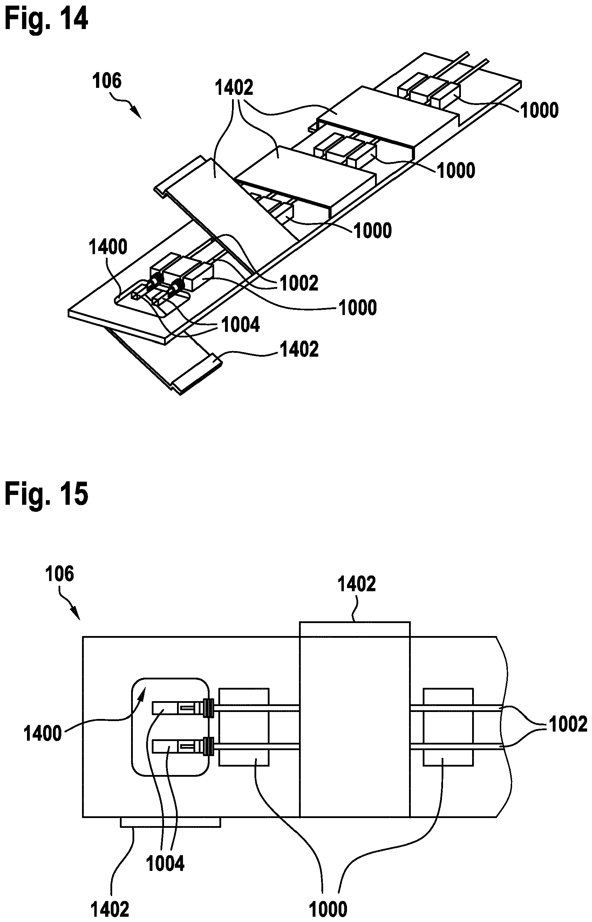

Wie in den Figuren 14 und 15 gezeigt, kann der Kabelträger 106 Bearbeitungsöffnungen aufweisen, durch die die Kabelenden auch von unten zugänglich sind.

Die Bearbeitungsschritte können auch auf unterschiedliche Bearbeitungsmaschinen aufgeteilt sein. Beispielsweise können die Kabel mit einer ersten Bearbeitungsmaschine abgelängt und mit Dichttüllen versehen werden, während weitere Bearbeitungsschritte durch eine zweite Bearbeitungsmaschine ausgeführt werden. Denkbar ist auch, dass jeder der Bearbeitungsschritte von einer anderen Bearbeitungsmaschine ausgeführt wird.

Die fertig bearbeiteten Kabel lassen sich mithilfe der Kabelspeichervorrichtung 102 einfach nachfolgenden Prozessen zuführen, etwa einem Prozess zur Bestückung der Kabel mit Steckern oder einem Prozess zum Herstellen von Kabelbäumen.

Fig. 4 zeigt eine Kabelverarbeitungsmaschine 100, die im Wesentlichen der in Fig. 1 gezeigten Kabelverarbeitungsmaschine 100 entspricht, mit dem Unterschied, dass die Kabelspeichervorrichtung 102 hier ein kassettenähnliches Schutzgehäuse 400 aufweist. Das Schutzgehäuse 400 weist an seiner der Kabelgreifvorrichtung 122 zugewandten Oberseite eine schlitzförmige Schutzgehäuseöffnung 402 auf, die sich hier beispielhaft über eine gesamte Länge L_{S} des Schutzgehäuses 400 erstreckt. Innerhalb des Schutzgehäuses 400 sind die beiden Spulen 104, 108 angeordnet. Der Kabelträger 106 kann innerhalb des Schutzgehäuses 400 von einer Spule zur anderen Spule gewickelt werden.

Die beiden Umlenkrollen 118, 120 der Umlenkeinrichtung 112 sind im Bereich der Schutzgehäuseöffnung 402 teils innerhalb des Schutzgehäuses 400, teils ausserhalb des Schutzgehäuses 400 angeordnet. Der Arbeitsbereich 114 erstreckt sich in Längsrichtung des Schutzgehäuses 400 entlang der Schutzgehäuseöffnung 402. Ähnlich wie in Fig. 1 ist der Kabelträger 106 an seiner Oberseite für die Kabelgreifvorrichtung 122 zugänglich.

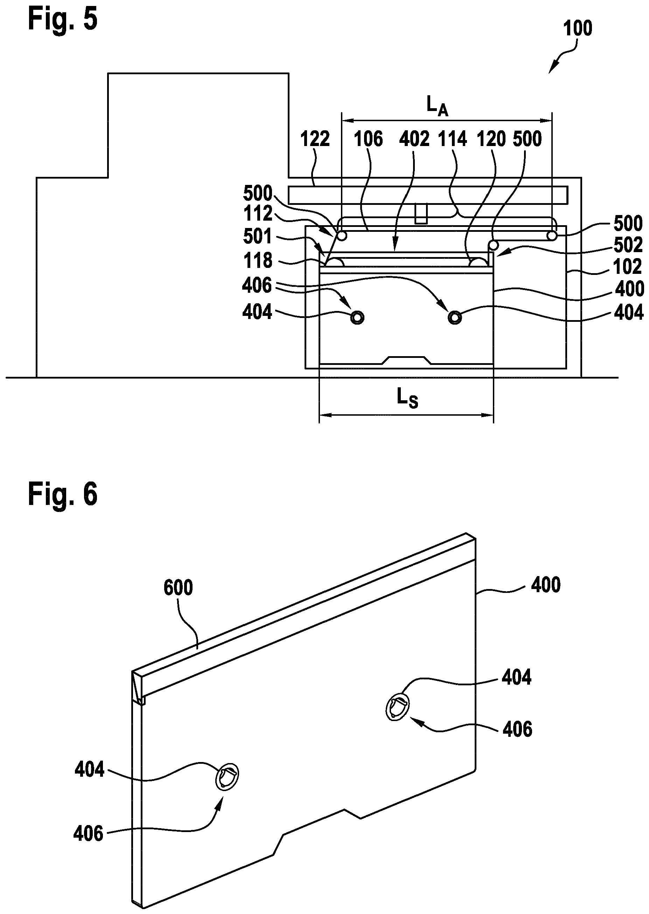

Der Arbeitsbereich 114 kann sich von der ersten Umlenkrolle 118 zur zweiten Umlenkrolle 120 erstrecken. Sollte der Arbeitsbereich 114 zu kurz für die Be- oder Entladung des Kabelträgers 106 sein, so kann der Kabelträger 106 als Schlaufe aus dem Schutzgehäuse 400 gezogen und über weitere Umlenkungen geführt werden, wie es im Folgenden anhand von Fig. 5 näher beschrieben wird. Dadurch kann der Arbeitsbereich 114 deutlich verlängert werden.

Die beiden Spulen 104, 108 können jeweils eine zentrale Mitnehmeraufnahme 404 zum Aufnehmen eines mittels des Spulenantriebs 109 drehbaren Mitnehmers aufweisen. Die Mitnehmer können beispielsweise jeweils formschlüssig in eine der Mitnehmeraufnahmen 404 eingreifen. Das Schutzgehäuse 400 kann entsprechende Mitnehmeröffnungen 406 zum Hindurchführen der Mitnehmer aufweisen.

Somit kann das Schutzgehäuse 400 mit allen darin angeordneten oder daran befestigten Komponenten ähnlich einer Tonband- oder Videokassette auf die Mitnehmer aufgeschoben und einfach ausgetauscht werden.

Ein solcher Kabelspeicher in Kassettenform lässt sich gut in ein automatisches Logistiksystem integrieren und auch automatisch einer Kabelverarbeitungsmaschine zuführen. Hierzu können bekannte Techniken analog der Handhabung von VHS-Kassetten oder Magnetspeicherbändern verwendet werden.

Fig. 5 zeigt eine Ausführung der Kabelverarbeitungsmaschine 100, bei der eine Länge L_{A} des Arbeitsbereichs 114 im Unterschied zu Fig. 4 deutlich grösser als die Länge Lₛ des Schutzgehäuses 400 ist. Dies kann beispielsweise dadurch erreicht werden, dass die Umlenkeinrichtung 112 zusätzlich zu den beiden Umlenkrollen 118, 120 drei weitere Umlenkrollen 500 aufweist, die den Kabelträger 106 von der ersten Umlenkrolle 118 kommend an einer Austrittsstelle 501 aus dem Schutzgehäuse 400 herausführen, mit einer definierten Länge L_{A} durch den Arbeitsbereich 114 führen und schliesslich an einer Eintrittsstelle 502 zur zweiten Umlenkrolle 120 zurückführen. Der Arbeitsbereich 114 kann sich dabei vollständig ausserhalb des Schutzgehäuses 400 erstrecken.

Fig. 6 zeigt das Schutzgehäuse 400, wie es weiter oben anhand der Figuren 4 und 5 beschrieben wurde. Das Schutzgehäuse 400 umfasst hier eine beweglich gelagerte Schutzgehäuseklappe 600 zum Verschliessen der Schutzgehäuseöffnung 402, d. h. zum Abtrennen eines Innenraums des Schutzgehäuses 400 von einer Aussenumgebung. Im verschlossenen Zustand des Schutzgehäuses 400, wie er in Fig. 6 gezeigt ist, sind sowohl die beiden Spulen 104, 108 als auch die Umlenkeinrichtung 112, genauer die beiden Umlenkrollen 118, 120, jeweils vollständig vom Schutzgehäuse 400 umgeben.

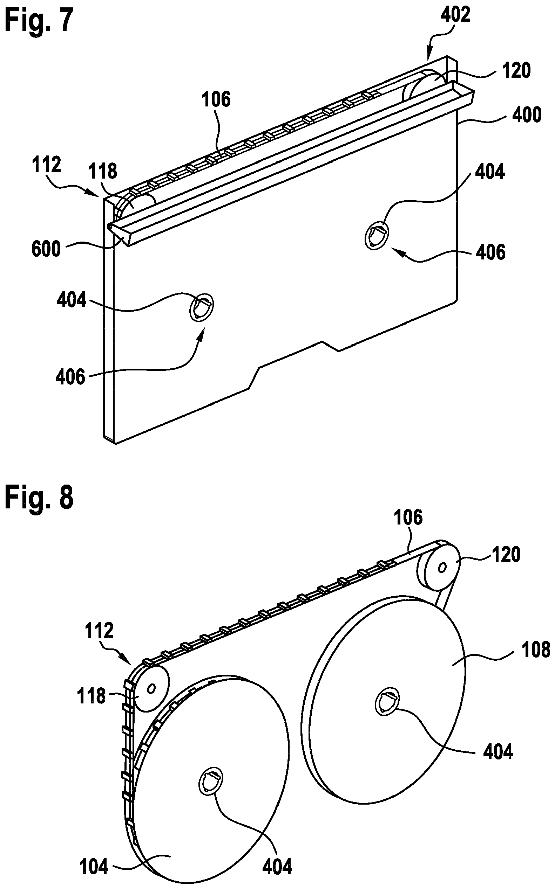

Fig. 7 zeigt das Schutzgehäuse 400 mit der Schutzgehäuseklappe 600 im geöffneten Zustand.

Fig. 8 zeigt eine mögliche Anordnung der Abwickelspule 104, der Aufwickelspule 108 sowie der beiden Umlenkrollen 118, 120 der Umlenkeinrichtung 112 im Schutzgehäuse 400.

Fig. 9 zeigt eine vergrösserte Darstellung der Abwickelspule 104 mit dem darauf aufgewickelten Kabelträger 106.

An der Abwickelspule 104 kann optional ein Informationsträger 900 angebracht sein, der anzeigt, welche Kabel an welcher Position am Kabelträger 106 fixiert sind. Der Informationsträger 900 kann beispielsweise ein Speicherbaustein, ein RFID-Transponder oder ein maschinenlesbarer Code sein.

Fig. 10 zeigt einen Abschnitt des Kabelträgers 106 in vergrösserter Darstellung. Der Kabelträger 106, der hier beispielhaft bandförmig ausgeführt ist, weist auf seiner Oberseite eine Mehrzahl von Kabelhaltern 1000 auf, die in Längsrichtung des Kabelträgers 106 hintereinander und jeweils in einem bestimmten Abstand zueinander angeordnet sind. Die Kabelhalter 1000 fixieren zwei nebeneinanderliegende Kabel 1002, die sich jeweils in Längsrichtung des Kabelträgers 106 erstrecken und an ihren Enden jeweils einen Anschluss 1004, etwa einen Crimpstecker, aufweisen.

Beispielsweise kann der Kabelträger 106 eine Mehrzahl solcher Kabelpaare umfassen, wobei die Kabelpaare in Längsrichtung des Kabelträgers 106 hintereinander angeordnet sein können. Hintereinanderliegende Kabel verschiedener Kabelpaare können als eine Kabellinie aufgefasst werden. Der Kabelträger 106 kann somit mindestens zwei parallel verlaufende Kabellinien oder Reihen von Kabeln 1002 umfassen.

Optional kann der Kabelträger 106 eine maschinenlesbare Markierung 1006 aufweisen, die Positionen in Längsrichtung des Kabelträgers 106 codiert. Die Markierung 1600 ist hier lediglich schematisch angedeutet und kann in einer beliebigen geeigneten Form ausgeführt sein.

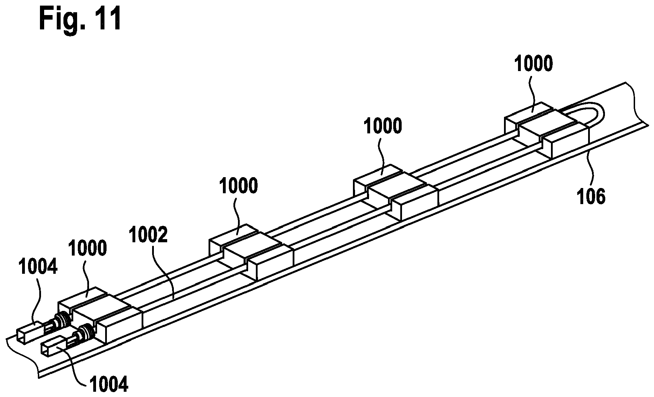

Fig. 11 zeigt den Kabelträger 106 aus Fig. 10, mit dem Unterschied, dass hier statt zweier kurzer Kabel 1002 ein langes Kabel 1002, das etwa doppelt so lang wie eines der kurzen Kabel 1002 ist, von den Kabelhaltern 1000 gehalten wird. Das lange Kabel 1002 ist in Form einer offenen Schlaufe auf dem Kabelträger 106 fixiert.

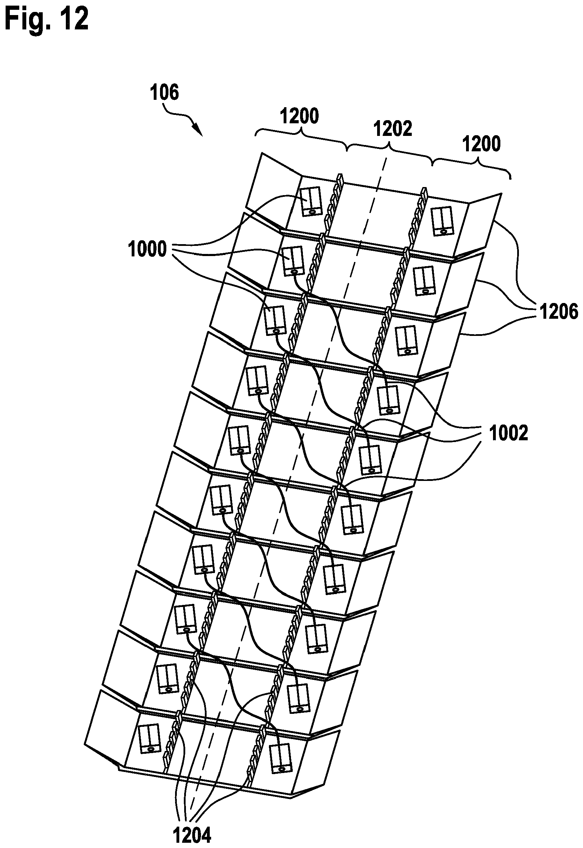

Fig. 12 zeigt einen Kabelträger 106, der quer zur Längsrichtung des Kabelträgers 106 in zwei äussere Bereiche 1200 und einen zwischen den beiden äusseren Bereichen 1200 befindlichen mittleren Bereich 1202 unterteilt ist. Die Längsrichtung ist mit einer gestrichelten Linie angedeutet. Die Bereiche 1200, 1202 können als parallele Bahnen oder Spuren des Kabelträgers 106 aufgefasst werden. Die äusseren Bereiche 1200 können zur Aufnahme der jeweiligen Kabelenden der Kabel 1002 dienen. Dazu ist in jedem der äusseren Bereiche 1200 eine Mehrzahl von Kabelhaltern 1000 angeordnet. Beispielhaft sind die Kabelhalter 1000 in jedem der äusseren Bereiche 1200 in Längsrichtung des Kabelträgers 106 in einer Reihe hintereinander angeordnet. Mittels der Kabelhalter 1000 können die Kabel 1002 beispielsweise schräg zur Längsrichtung des Kabelträgers 106, d. h. diagonal, auf dem Kabelträger 106 fixiert werden, wobei sich ein jeweiliger mittlerer Abschnitt der Kabel 1002 über den mittleren Bereich 1202 erstreckt.

Zum Schutz der Kabelenden können um die einzelnen Plätze der Kabelenden herum Schutzkörper vorgesehen sein.

Zusätzlich zu den Kabelhaltern 1000 kann der Kabelträger 106 eine Mehrzahl zusätzlicher Kabelhalter 1204 aufweisen. Bei den zusätzlichen Kabelhaltern 1204 kann es sich etwa um Bürstenleisten oder geschlitzte Trennelemente zum zusätzlichen Fixieren der jeweiligen mittleren Abschnitte der Kabel 1200 handeln. Wie in Fig. 12 zu sehen, können die zusätzlichen Kabelhalter 1204 dazu dienen, den mittleren Bereich 1202 von den beiden äusseren Bereichen 1200 abzugrenzen. Durch die Verwendung von Bürstenleisten bzw. geschlitzten Trennelementen kann die Entnahme der Kabel 1002 verbessert werden.

Beispielhaft ist der Kabelträger 106 hier kettenartig aus einer Mehrzahl beweglich miteinander gekoppelter Kabelträgerglieder 1206 ausgeführt.

Die Kabel 1002 können beispielsweise auch s-förmig auf dem Kabelträger 106 positioniert werden. Für eine s-förmige Positionierung der Kabel 1002 kann der Kabelträger 106 wesentlich breiter gestaltet werden, beispielsweise ca. 200 mm breit. Dadurch kann die Speicherkapazität deutlich erhöht werden.

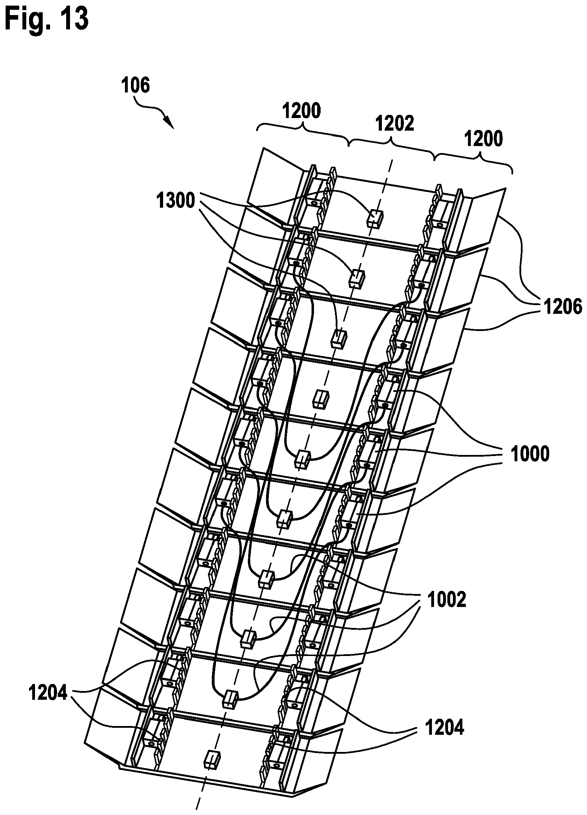

Fig. 13 zeigt einen Kabelträger 106 ähnlich dem in Fig. 12 gezeigten Kabelträger 106. Der Kabelträger 106 umfasst hier zusätzlich eine Mehrzahl von Haken 1300 zum Anordnen der Kabel 1002 in Schlaufenform. Dabei zeigen beide Kabelenden eines Kabels 1002 in dieselbe Richtung. Dies kann für spezielle Kabelverarbeitungsmaschinen wie etwa Steckerbestückungsmaschinen nötig sein.

Die Haken 1300 im mittleren Bereich 1202 können in Längsrichtung des Kabelträgers 106 hintereinander angeordnet sein. Beispielsweise können die Haken 1300 als geschlitzte Elastomerkörper ausgeführt sein und zur Schlaufensicherung dienen.

Die Anzahl der Bereiche 1200, 1202 kann in diesem Fall auch auf zwei reduziert werden, genauer auf einen ersten Bereich zum Halten der Kabelenden und einen zweiten Bereich zum Halten der Kabelschlaufen.

Fig. 14 zeigt einen Abschnitt eines Kabelträgers 106, der eine Mehrzahl von Bearbeitungsöffnungen 1400 aufweist. Die Bearbeitungsöffnungen 1400 ermöglichen beispielsweise einen einfachen Zugriff auf die Kabelenden der Kabel 1002, etwa zum Abisolieren, Aufbringen von Dichttüllen oder Crimpen von Kontakten.

Um Beschädigungen zu verhindern oder die Kabel 1002 zu führen, kann der Kabelträger 106 zusätzlich eine Mehrzahl von Schutzklappen 1402 aufweisen, die im zugeklappten Zustand Abschnitte des Kabelträgers 106 verdecken und im aufgeklappten Zustand freigeben. Die Schutzklappen 1402 können im zugeklappten Zustand Abschnitte der auf dem Kabelträger 106 fixierten Kabel 1002 und/oder die Bearbeitungsöffnungen 1400 abdecken.

Fig. 15 zeigt eine Draufsicht auf den Kabelträger 106 aus Fig. 14.

Die Kabelhalter 1000 können je nach Spezifikation der Kabel 1002 unterschiedlich gestaltet sein. Kabel mit stabiler Isolationsschicht können beispielsweise zwischen Windungen einer Spiralfeder geklemmt werden. Für die Fixierung dünner Kabel eignen sich gängige Druckverschlüsse wie etwa 3M Dual Lock^{™}. Empfindliche Kabel können mit Backen aus Elastomer gehalten werden.

Zur Anpassung an eine aktuelle Kabellänge können die Kabelhalter 1000 am Kabelträger 106 in einer Bahn verschiebbar sein.

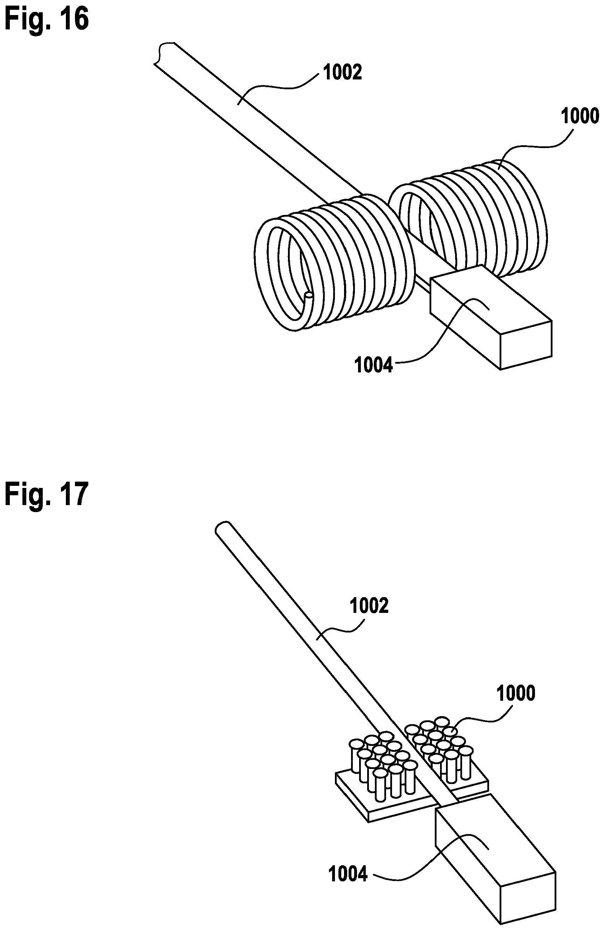

Fig. 16 zeigt eine mögliche Ausführung eines Kabelhalters 1000 in Form einer Spiralfeder zum Einspannen eines oder mehrerer Kabel 1002.

Fig. 17 zeigt eine mögliche Ausführung eines Kabelhalters 1000 in Form eines Druckverschlusses zum Fixieren eines oder mehrerer Kabel 1002.

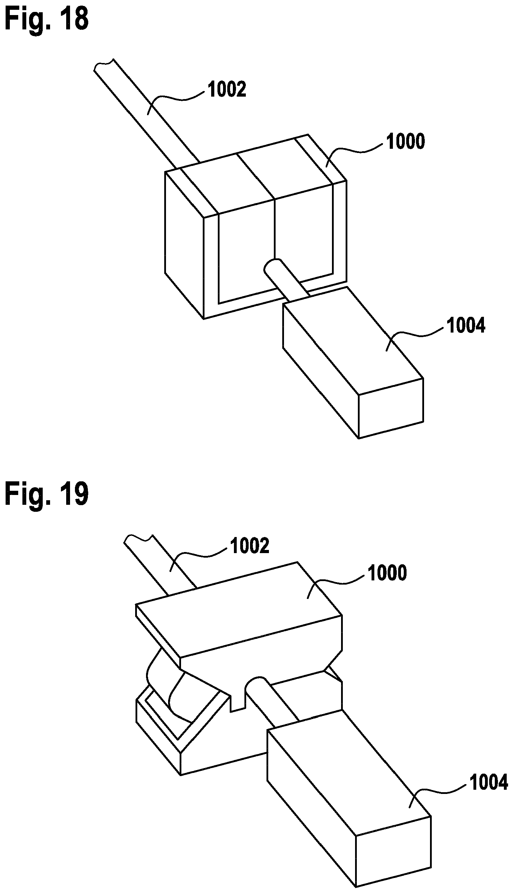

Fig. 18 zeigt eine mögliche Ausführung eines Kabelhalters 1000 in Form zweier Backen, zwischen die ein oder mehrere Kabel 1002 eingeklemmt werden können.

Fig. 19 zeigt eine mögliche Ausführung eines Kabelhalters 1000 in Form einer Klammer zum Halten einer oder mehrerer Kabel 1002.

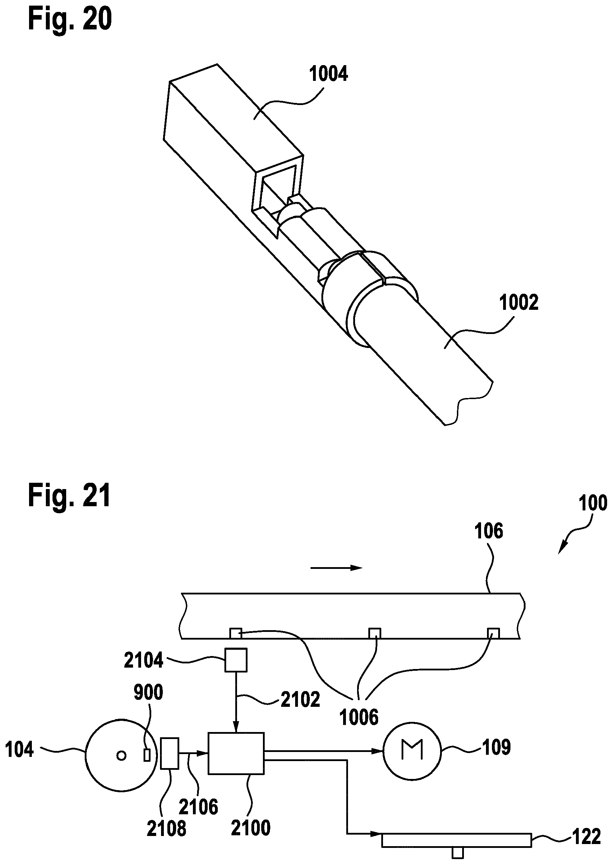

Fig. 20 zeigt ein Beispiel für ein Kabel 1002, das an seinem Ende einen Anschluss 1004 in Form eines Crimpsteckers aufweist.

Beispielsweise können die Kabelhalter 1000 als vom Kabelträger 106 lösbare Klammern ausgestaltet sein. Die Klammern können die Kabel 1002 über deren Isolationsmantel an einer beliebigen Stelle halten. Die Kabel 1002 können jeweils von mehreren solcher Klammern gehalten werden.

Die Klammern können die Kabel 1002 auch im Bereich deren Kabelspitzen über relativ unempfindliche Pressstellen eines B-Crimps oder Isolations-Crimps halten. Die Klammern können etwa mittels üblicher Druck- oder Schnappverbindungen mit dem Kabelträger 106 verbunden werden. Möglich ist auch, dass die Klammern in einem Verarbeitungsprozess, beispielsweise beim Crimpen, an die Kabel 1002 angebracht werden. Auf diese Weise lässt sich die Ausrichtung eines Kontaktteils für nachfolgende Prozesse erhalten, etwa für eine Bestückung eines Steckers.

Fig. 21 zeigt ein Blockdiagramm zur Veranschaulichung eines Verfahrens zum Betreiben einer Kabelverarbeitungsmaschine 100, wie sie vorangehend anhand der Figuren 1 bis 20 beschrieben wurde.

Die Kabelverarbeitungsmaschine 100 kann ein Steuergerät 2100 aufweisen, das ausgeführt ist, um eine Positionsinformation 2102 von einer Erfassungseinrichtung 2104 zum Erfassen der Markierung 1006 am Kabelträger 106 und eine Kabelinformation 2106 von einem Auslesegerät 2108 zum Auslesen des Informationsträgers 900 an der Abwickelspule 104 zu empfangen. Die Positionsinformation 2102 kann anzeigen, welcher Abschnitt des Kabelträgers 106 sich aktuell im Arbeitsbereich 114 befindet. Die Kabelinformation 2106 kann anzeigen, welche Kabel 1002 sich in welchen Abschnitten des Kabelträgers 106 befinden. Beispielsweise kann das Steuergerät 2100 anhand der Kabelinformation 2106 bestimmen, welches der auf dem Kabelträger 106 fixierten Kabel 1002 bzw. welcher Abschnitt des Kabelträgers 106 als nächstes in den Arbeitsbereich 114 bewegt werden soll. Basierend auf der Positionsinformation 2102 kann das Steuergerät 2100 den Kabelträger 106 durch entsprechendes Ansteuern des Spulenantriebs 109 so lang vor- oder zurückspulen, bis die Positionsinformation 2102 anzeigt, dass sich der gewünschte Abschnitt des Kabelträgers 106 im Arbeitsbereich 114 befindet.

Zusätzlich kann das Steuergerät 2100 die Kabelgreifvorrichtung 122 abhängig von einer Bewegung des Kabelträgers 106 ansteuern.

Abschliessend wird darauf hingewiesen, dass Begriffe wie "aufweisend", "umfassend" etc. keine anderen Elemente oder Schritte ausschliessen und Begriffe wie "eine" oder "ein" keine Vielzahl ausschliessen. Ferner wird darauf hingewiesen, dass Merkmale oder Schritte, die mit Verweis auf eines der obigen Ausführungsbeispiele beschrieben worden sind, auch in Kombination mit anderen Merkmalen oder Schritten anderer der obigen Ausführungsbeispiele verwendet werden können. Bezugszeichen in den Ansprüchen sind nicht als Einschränkung anzusehen.

### Bezugszeichenliste

- 100: Kabelverarbeitungsmaschine
- 102: Kabelspeichervorrichtung
- 104: Abwickelspule
- 106: Kabelträger
- 107: Kabelbehälter
- 108: Aufwickelspule
- 109: Spulenantrieb
- 110: Antriebsrichtung
- 112: Umlenkeinrichtung
- 114: Arbeitsbereich
- 118: erste Umlenkrolle
- 120: zweite Umlenkrolle
- 122: Kabelgreifvorrichtung
- 200: Vorrichtung zum Befüllen einer Kabelspeichervorrichtung
- 204: Kabelmaterial
- 206: Ablängvorrichtung
- 300: Kabelbearbeitungsstation
- 400: Schutzgehäuse
- 402: Schutzgehäuseöffnung
- 404: Mitnehmeraufnahme
- 406: Mitnehmeröffnung
- 500: weitere Umlenkrolle
- 501: Austrittsstelle
- 502: Eintrittsstelle
- 600: Schutzgehäuseklappe
- 900: Informationsträger
- 1000: Kabelhalter
- 1002: Kabel
- 1004: Anschluss
- 1006: Markierung
- 1200: äusserer Bereich
- 1202: mittlere Bereich
- 1204: zusätzlicher Kabelhalter
- 1206: Kabelträgerglied
- 1300: Haken
- 1400: Bearbeitungsöffnung
- 1402: Schutzklappe
- 2100: Steuergerät
- 2102: Positionsinformation
- 2104: Erfassungseinrichtung
- 2106: Kabelinformation
- 2108: Auslesegerät
- L_{A}: Arbeitsbereichlänge
- L_{S}: Schutzgehäuselänge

## Patentansprüche

1. Kabelspeichervorrichtung (102) für eine Kabelverarbeitungsmaschine (100) zum Verarbeiten von Kabeln (1002), wobei die Kabelspeichervorrichtung (102) umfasst:
einen wickelbaren Kabelträger (106) mit einer Mehrzahl von Kabelhaltern (1000) zum Fixieren von Kabeln (1002) an dem Kabelträger (106);
eine Abwickelspule (104) zum Abwickeln des Kabelträgers (106);
eine Aufwickelspule (108) zum Aufwickeln des Kabelträgers (106), wenn der Kabelträger (106) von der Abwickelspule (104) abgewickelt wird;
wobei mindestens eine der Spulen (104, 108) mit einem Spulenantrieb (109) der Kabelverarbeitungsmaschine (100) koppelbar ist; und
eine Umlenkeinrichtung (112), die ausgeführt ist, um den Kabelträger (106) beim Abwickeln von der Abwickelspule (104) und Aufwickeln auf die Aufwickelspule (108) durch einen Arbeitsbereich (114) zu führen.

2. Kabelspeichervorrichtung (102) nach Anspruch 1,
wobei der Kabelträger (106) eine maschinenlesbare Markierung (1006) aufweist, die Positionen in Längsrichtung des Kabelträgers (106) codiert.

3. Kabelspeichervorrichtung (102) nach einem der vorhergehenden Ansprüche, wobei die Kabelhalter (1000) angeordnet sind, um die Kabel (1002) in mindestens zwei sich in Längsrichtung des Kabelträgers (106) erstreckenden Reihen zu fixieren.

4. Kabelspeichervorrichtung (102) nach einem der vorhergehenden Ansprüche, wobei die Kabelhalter (1000) zumindest teilweise wiederlösbar am Kabelträger (106) befestigt sind.

5. Kabelspeichervorrichtung (102) nach einem der vorhergehenden Ansprüche, wobei die Kabelhalter (1000) zumindest teilweise auf dem Kabelträger (106) verschiebbar angeordnet sind.

6. Kabelspeichervorrichtung (102) nach einem der vorhergehenden Ansprüche, ferner umfassend:
ein Schutzgehäuse (400) mit einer Schutzgehäuseöffnung (402);
wobei die Abwickelspule (104) und die Aufwickelspule (108) zumindest teilweise innerhalb des Schutzgehäuses (400) angeordnet sind;
wobei die Umlenkeinrichtung (112) ausgeführt ist, um einen Abschnitt des Kabelträgers (106) entlang der Schutzgehäuseöffnung (402) und/oder durch die Schutzgehäuseöffnung (402) zu führen.

7. Kabelspeichervorrichtung (102) nach Anspruch 6,
wobei die Schutzgehäuseöffnung (402) eine Austrittsstelle (501) und eine Eintrittsstelle (502) umfasst;
wobei die Umlenkeinrichtung (112) ausgeführt ist, um den Kabelträger (106) von der Abwickelspule (104) kommend an der Austrittsstelle (501) aus dem Schutzgehäuse (400) herauszuführen, durch den Arbeitsbereich (114) zu führen und an der Eintrittsstelle (502) zur Aufwickelspule (108) gehend wieder in das Schutzgehäuse (400) hineinzuführen.

8. Kabelspeichervorrichtung (102) nach Anspruch 6 oder 7,
wobei eine Länge (L_{A}) des Arbeitsbereichs (114) grösser ist als eine Länge (L_{S}) des Schutzgehäuses (400).

9. Kabelspeichervorrichtung (102) nach einem der vorhergehenden Ansprüche,
wobei der Kabelträger (106) quer zu seiner Längsrichtung in zwei äussere Bereiche (1200) zum Aufnehmen eines jeweiligen Endabschnitts der Kabel (1002) und einen zwischen den äusseren Bereichen (1200) befindlichen mittleren Bereich (1202) zum Aufnehmen eines jeweiligen mittleren Abschnitts der Kabel (1002) unterteilt ist;
wobei die Kabelhalter (1000) in den äusseren Bereichen (1200) angeordnet sind.

10. Kabelspeichervorrichtung (102) nach Anspruch 9,
wobei die Kabelhalter (1000) in den äusseren Bereichen (1200) in Längsrichtung des Kabelträgers (106) aneinandergereiht sind.

11. Kabelspeichervorrichtung (102) nach Anspruch 9 oder 10,
wobei der Kabelträger (106) im mittleren Bereich (1202) eine Mehrzahl zusätzlicher Kabelhalter (1204; 1300) zum Fixieren der mittleren Abschnitte der Kabel (1002) aufweist.

12. Kabelspeichervorrichtung (102) nach einem der vorhergehenden Ansprüche, wobei der Kabelträger (106) eine Mehrzahl von Bearbeitungsöffnungen (1400) zum Bearbeiten der Kabel (1002) aufweist.

13. Kabelspeichervorrichtung (102) nach einem der vorhergehenden Ansprüche, wobei der Kabelträger (106) eine Mehrzahl von Schutzklappen (1402) zum Schützen der Kabel (1002) aufweist;
wobei die Schutzklappen (1402) den Kabelträger (106) in einem zugeklappten Zustand teilweise überdecken und in einem aufgeklappten Zustand freigeben.

14. Kabelverarbeitungsmaschine (100) zum Verarbeiten von Kabeln (1002), aufweisend:
einen Arbeitsbereich (114);
eine Kabelspeichervorrichtung (102) nach einem der vorhergehenden Ansprüche,
wobei der Kabelträger (106) mittels der Umlenkeinrichtung (112) der Kabelspeichervorrichtung (102) durch den Arbeitsbereich (114) geführt ist;
einen Spulenantrieb (109) zum Antreiben mindestens einer der Spulen (104, 108) der Kabelspeichervorrichtung (102).

15. Verfahren zum Betreiben einer Kabelverarbeitungsmaschine (100) nach Anspruch 14, wobei das Verfahren umfasst:
Erfassen einer Markierung (1006) des Kabelträgers (106);
Bestimmen einer Position in Längsrichtung des Kabelträgers (106) anhand der Markierung (1006); und
Bewegen des Kabelträgers (106) mittels des Spulenantriebs (109), bis die Position mit einer vorgegebenen Position übereinstimmt.

## Claims

1. A cable storage device (102) for a cable processing machine (100) for processing cables (1002), wherein the cable storage device (102) comprises:
a windable cable carrier (106) having a plurality of cable holders (1000) for fixing cables (1002) to the cable carrier (106);
a payout reel (104) for unwinding the cable carrier (106);
a take-up reel (108) for winding the cable carrier (106) when the cable carrier (106) is unwound from the payout reel (104);
wherein at least one of the reels (104, 108) can be coupled to a reel drive (109) of the cable processing machine (100); and
a deflection apparatus (112) designed to guide the cable carrier (106) through a working region (114) during unwinding from the payout reel (104) and winding on the take-up reel (108).

2. The cable storage device (102) according to claim 1,
wherein the cable carrier (106) has a machine-readable marking (1006) that encodes positions in the longitudinal direction of the cable carrier (106).

3. The cable storage device (102) according to any of the preceding claims, wherein the cable holders (1000) are arranged to fix the cables (1002) in at least two rows extending in the longitudinal direction of the cable carrier (106).

4. The cable storage device (102) according to any of the preceding claims, wherein the cable holders (1000) are at least in part detachably fastened to the cable carrier (106).

5. The cable storage device (102) according to any of the preceding claims, wherein the cable holders (1000) are arranged at least in part displaceably on the cable carrier (106).

6. The cable storage device (102) according to any of the preceding claims, further comprising:
a protective housing (400) having a protective housing opening (402);
wherein the payout reel (104) and the take-up reel (108) are arranged at least in part within the protective housing (400);
wherein the deflection apparatus (112) is designed to guide a portion of the cable carrier (106) along the protective housing opening (402) and/or through the protective housing opening (402).

7. The cable storage device (102) according to claim 6,
wherein the protective housing opening (402) comprises an exit point (501) and an entry point (502);
wherein the deflection apparatus (112) is designed to guide the cable carrier (106) coming from the payout reel (104) out of the protective housing (400) at the exit point (501), guide it through the working region (114) and introduce it back into the protective housing (400) at the entry point (502) going toward the take-up reel (108).

8. The cable storage device (102) according to claim 6 or claim 7,
wherein a length (L_{A}) of the working region (114) is larger than a length (L_{S}) of the protective housing (400).

9. The cable storage device (102) according to any of the preceding claims,
wherein the cable carrier (106) is divided transversely to its longitudinal direction into two outer regions (1200) for receiving a respective end portion of the cables (1002) and a central region (1202) located between the outer regions (1200) for receiving a respective central portion of the cables (1002);
wherein the cable holders (1000) are arranged in the outer regions (1200).

10. The cable storage device (102) according to claim 9,
wherein the cable holders (1000) are lined up in the longitudinal direction of the cable carrier (106) in the outer regions (1200).

11. The cable storage device (102) according to claim 9 or claim 10,
wherein the cable carrier (106) has, in the central region (1202), a plurality of additional cable holders (1204; 1300) for fixing the central portions of the cables (1002).

12. The cable storage device (102) according to any of the preceding claims, wherein the cable carrier (106) comprises a plurality of machining openings (1400) for machining the cables (1002).

13. The cable storage device (102) according to any of the preceding claims, wherein the cable carrier (106) comprises a plurality of protective flaps (1402) for protecting the cables (1002);
wherein the protective flaps (1402) partially cover the cable carrier (106) in a closed state and expose it in an open state.

14. A cable processing machine (100) for processing cables (1002), comprising:
a working region (114);
a cable storage device (102) according to any of the preceding claims, wherein the cable carrier (106) is guided through the working region (114) by means of the deflection apparatus (112) of the cable storage device (102);
a reel drive (109) for driving at least one of the reels (104, 108) of the cable storage device (102).

15. A method for operating a cable processing machine (100) according to claim 14, wherein the method comprises:
detecting a marking (1006) of the cable carrier (106);
determining a position in the longitudinal direction of the cable carrier (106) using the marking (1006); and
moving the cable carrier (106) by means of the reel drive (109) until the position matches a predetermined position

## Revendications

1. Dispositif de stockage de câbles (102) pour une machine de traitement de câbles (100) permettant de traiter des câbles (1002), le dispositif de stockage de câbles (102) comprenant :
un support de câbles (106) pouvant être enroulé et comportant une pluralité de moyens de maintien de câbles (1000) permettant de fixer des câbles (1002) au support de câbles (106) ;
une bobine de déroulement (104) permettant de dérouler le support de câbles (106) ;
une bobine d'enroulement (108) permettant d'enrouler le support de câbles (106) lorsque le support de câbles (106) est déroulé depuis la bobine de déroulement (104) ;
dans lequel au moins l'une des bobines (104, 108) peut être couplée à un entraînement de bobine (109) de la machine de traitement de câbles (100) ; et
un appareil de renvoi (112) conçu pour guider le support de câbles (106) à travers une zone de travail (114) lors du déroulement depuis la bobine de déroulement (104) et de l'enroulement sur la bobine d'enroulement (108).

2. Dispositif de stockage de câbles (102) selon la revendication 1,
dans lequel le support de câbles (106) présente un repère (1006) lisible par machine qui encode des positions dans la direction longitudinale du support de câbles (106).

3. Dispositif de stockage de câbles (102) selon l'une des revendications précédentes,
dans lequel les moyens de maintien de câbles (1000) sont disposés de manière à fixer les câbles (1002) dans au moins deux rangées s'étendant dans la direction longitudinale du support de câbles (106).

4. Dispositif de stockage de câbles (102) selon l'une des revendications précédentes,
dans lequel les moyens de maintien de câbles (1000) sont fixés de manière à être au moins partiellement amovibles sur le support de câbles (106).

5. Dispositif de stockage de câbles (102) selon l'une des revendications précédentes,
dans lequel les moyens de maintien de câbles (1000) sont disposés de manière à pouvoir coulisser au moins partiellement sur le support de câbles (106).

6. Dispositif de stockage de câbles (102) selon l'une des revendications précédentes, comprenant en outre :
un boîtier de protection (400) comportant une ouverture de boîtier de protection (402) ;
dans lequel la bobine de déroulement (104) et la bobine d'enroulement (108) sont disposées au moins partiellement à l'intérieur du boîtier de protection (400) ;
dans lequel l'appareil de renvoi (112) est conçu pour guider une section du support de câbles (106) le long de l'ouverture de boîtier de protection (402) et/ou à travers l'ouverture de boîtier de protection (402).

7. Dispositif de stockage de câbles (102) selon la revendication 6,
dans lequel l'ouverture de boîtier de protection (402) comprend un point de sortie (501) et un point d'entrée (502) ;
dans lequel l'appareil de renvoi (112) est conçu pour faire sortir le support de câbles (106) hors du boîtier de protection (400) au niveau du point de sortie (501) depuis la bobine de déroulement (104), le guider à travers la zone de travail (114) et l'amener à nouveau dans le boîtier de protection (400) au niveau du point d'entrée (502) vers la bobine d'enroulement (108).

8. Dispositif de stockage de câbles (102) selon la revendication 6 ou 7,
dans lequel une longueur (L_{A}) de la zone de travail (114) est supérieure à une longueur (L_{S}) du boîtier de protection (400).

9. Dispositif de stockage de câbles (102) selon l'une des revendications précédentes,
dans lequel le support de câbles (106) est divisé transversalement à sa direction longitudinale en deux zones extérieures (1200) pour la réception d'une section d'extrémité respective des câbles (1002) et une zone centrale (1202) située entre les zones extérieures (1200) pour la réception d'une section centrale respective des câbles (1002) ;
dans lequel les moyens de maintien de câbles (1000) sont disposés dans les zones extérieures (1200).

10. Dispositif de stockage de câbles (102) selon la revendication 9,
dans lequel les moyens de maintien de câbles (1000) sont alignés dans les zones extérieures (1200) dans la direction longitudinale du support de câbles (106).

11. Dispositif de stockage de câbles (102) selon la revendication 9 ou 10,
dans lequel le support de câbles (106) présente dans la zone centrale (1202) une pluralité de moyens de maintien de câbles supplémentaires (1204 ; 1300) pour la fixation des sections centrales des câbles (1002).

12. Dispositif de stockage de câbles (102) selon l'une des revendications précédentes,
dans lequel le support de câbles (106) présente une pluralité d'ouvertures de traitement (1400) permettant de traiter les câbles (1002).

13. Dispositif de stockage de câbles (102) selon l'une des revendications précédentes,
dans lequel le support de câbles (106) présente une pluralité de clapets de protection (1402) permettant de protéger les câbles (1002) ;
dans lequel les clapets de protection (1402) recouvrent partiellement le support de câbles (106) dans un état fermé et le libèrent dans un état ouvert.

14. Machine de traitement de câbles (100) permettant de traiter des câbles (1002), présentant :
une zone de travail (114) ;
un dispositif de stockage de câbles (102) selon l'une des revendications précédentes, dans laquelle le support de câbles (106) est guidé à travers la zone de travail (114) au moyen de l'appareil de renvoi (112) du dispositif de stockage de câbles (102) ;
un entraînement de bobine (109) permettant d'entraîner au moins l'une des bobines (104, 108) du dispositif de stockage de câbles (102).

15. Procédé permettant de faire fonctionner une machine de traitement de câbles (100) selon la revendication 14, le procédé comprenant :
la détection d'un repère (1006) du support de câbles (106) ;
la détermination d'une position dans la direction longitudinale du support de câbles (106) à l'aide du repère (1006) ; et
le déplacement du support de câbles (106) au moyen de l'entraînement de bobine (109) jusqu'à ce que la position coïncide avec une position prédéterminée.
